# EUROPEAN PATENT APPLICATION

(11) **EP 1 768 224 A1**
(43) Date of publication of application: **28.03.2007**
(21) Application number: 04731833.2
(22) Date of filing: 09.05.2004
(51) Int. Cl.: H02J 7/00

(54) **A SOLAR CHARGED SYSTEM**

(71) Applicant: Li, Yun, Macau (CN); Poon, Lock Kee Rocky, Macau (CN)
(72) Inventor: Li, Yun, Macau (CN); Poon, Lock Kee Rocky, Macau (CN)
(74) Representative: Ekström, Nils
(86) International application number: PCT/CN2004/000462
(87) International publication number: WO 2005/109599

(57) **Abstract**

A solar charging system comprises solar cells, storage batteries, and a diode connected in series between the solar cells and the storage batteries, an anode of the diode being connected to a positive electrode of the solar cells, and a cathode of the diode being connected a positive electrode of the storage batteries, so that the solar cells directly charge the storage batteries, wherein a ratio of the number n of the solar cells to the number m of the storage batteries (i.e. n/m) is within a range of 3.5 to 4.0, and an internal resistance of the storage batteries is selected so that each solar cell outputs a voltage of 0. 36 to 0.5 Vundera standard light intensity condition. In the above solar charging system, the solar cells directly charge the storage batteries. Moreover, the above solar charging system has a simple configuration a high charging efficiency.

## Description

### Technical Field

The invention relates to a solar charging system, and particularly to a solar charging system in which storage batteries are directly charged with the electric energy generated by solar cells.

### Background Art

In a typical application system using solar cells, storage batteries are charged by solar cells so as to store electric energy, and then the storage batteries directly supply a DC current to a load, or supply an AC current to a load after the DC current output from the storage batteries is converted to an AC output. This type of application system, which has storage batteries for storing electric energy, could store electric energy generated by the solar cells at daytime and supply the stored electric energy at night, so as to fulfill a practical requirement for a use of the electric energy.

In the prior art, the solar power generating system has a voltage converter between solar cells and storage batteries. With variations of the daylight condition and the temperature in the environment, an output voltage of solar cells changes. Thereby, a voltage converter is needed to provide a charge voltage required for charging storage batteries.

One type of the converter converts a variable voltage from solar cells to a prescribed constant voltage which is used to charge storage batteries. For example, Japanese patent application laid-open H02-023042 discloses such a charging device. Said prescribed constant voltage should be no less than such a value that the storage batteries could be fullcharged. However, when a light intensity in the environment is larger than a standard light intensity, the output voltage of solar cells will be larger than a prescribed charging voltage. In order to obtain a constant charging voltage, the voltage converter will filter out the part of the output that is larger than the prescribed charging voltage. That is, in order to meet the charging requirement of the storage batteries, a part of the electric energy generated by the solar cells is discarded by the voltage converter, instead of being supplied to the storage batteries. Consequently, those voltage converters providing a constant charging voltage can only have an energy conversion efficiency of no more than 70%.

Another type of the voltage converter is controlled with Pulse-Width Modulation (PWM) method. For example, Chinese patent No. 97110965.6 discloses a solar power charging system, in which a voltage converter circuit comprising a chopper and a PWM controller is provided between solar cells and storage batteries. The chopper is used to convert a DC voltage to a prescribed value, and the PWM controller detects a maximum output power of the solar cells under various daylight conditions and at various ambient temperatures, and exerts a PWM control over the chopper so that the chopper operates in a state of providing a maximum power output from the solar cells. Thus, the storage batteries could be charged in the state of maximum power output from the solar cells. This type of voltage converter could achieve an optimum power matching with the solar cells so as to improve the charging efficiency. However, the voltage converter brings the problems such as a complex circuit and an increased cost.

Moreover, in the above solar charging systemhaving a voltage converter, because the solar cells, the voltage converter and the storage batteries form a loop and the voltage converter as a resistor has an effect of voltage division, the charging voltage applied to the storage batteries is lowered. Consequently, the charging efficiency is decreased. That is, the voltage converter itself consumes the electric energy generated by the solar cells, which will provide a reduced electric energy to the storage batteries.

The simplest solar charging system is the one obtained by directly connecting solar cells to storage batteries. However, such a charging systemhas the problems such as a chargingvoltage larger than an overcharge voltage of the storage batteries, and a charging voltage smaller than that required for charging the storage batteries to their full capacity. Moreover, power matching between solar cells and storage batteries is not optimum. Consequently, the charging efficiency is poor.

### Contents of the Invention

To solve the above problems, the inventor proposes a solar charging system in which storage batteries are directly charged with the electric energy from solar cells.

According to the invention, a solar charging system comprises solar cells, storage batteries, and a diode connected in series between the solar cells and the storage batteries, an anode of the diode being connected to a positive electrode of the solar cells, and a cathode of the diode being connected a positive electrode of the storage batteries, so that the solar cells directly charge the storage batteries, wherein a ratio of the number n of the solar cells to the number m of the storage batteries (i.e. n/m) is within a range of 3.5 to 4.0, and an internal resistance of the storage batteries is selected so that each solar cell outputs a voltage of 0.36 to 0.5 V under a standard light intensity condition.

In the above solar charging system, the solar cells directly charge the storage batteries. Moreover, the above solar charging system has a simple configuration a high charging efficiency.

### Brief Description of the Drawings

Fig. 1 is a schematic diagram showing a solar charging system according to the invention.
Fig. 2 is a graph schematically showing an I-V curve of a solar cell under a standard light intensity condition, and a range of the internal resistance of a storage battery according to the invention.

### Detailed Description of the Invention

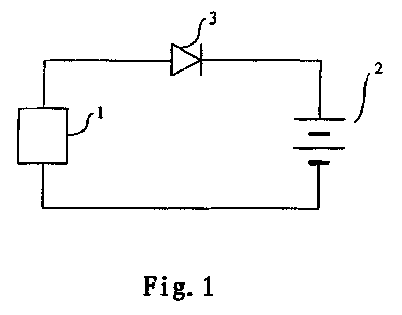

Fig. 1 is a schematic diagram showing a solar charging system according to the invention. The solar charging system comprises solar cells 1 for converting solar energy to electric energy, storage batteries 2 for storing the electric energy, and a diode 3 connected in series between the solar cells 1 and the storage batteries 2. An anode of the diode 3 is electrically connected to a positive electrode of the solar cells, and a cathode of the diode 3 is electrically connected to the positive electrode of the storage batteries 2, and a negative electrode of the solar cells 1 is electrically connected to the negative electrode of the storage batteries 2. The function of the diode 3 is to protect against a reverse charge when an output voltage of the solar cells 1 is lower than a terminal voltage of the storage batteries 2.

The solar cells 1 could be for example an assembly comprised of a plurality of solar cells made of single crystal or poly or amorphous silicon. Each solar cell provides a peak voltage of about 0.48 V, and thus an assembly comprised of 36 solar cells in series provides a peak voltage in a range of 16.5V -17.2V. The peak voltage herein means an output voltage of the solar cells under a standard light intensity when the output power reaches a maximum value. For a stack of storage batteries having a rated voltage of 12 V (i.e. a stack comprised of 10 batteries each having a rated voltage of 1.2 V connected in series), the voltage required for charging the storage batteries to their full capacity is about 17.5 V. Since the peak voltage of the assembly of solar cells is a little lower than the voltage required for charging the storage batteries to their full capacity, the storage batteries could not reach the full capacity when an assembly comprised of 36 solar cells charges a stack of storage batteries rated 12 V.

The inventor found that an output voltage of the assembly of solar cells could be higher than the voltage required for charging a stack of storage batteries to their full capacity so that the storage batteries reach the full capacity, if the number of the stack of storage batteries is reduced. Nevertheless, if an output voltage of the assembly of solar cells is excessively high, there will be too many solar cells used for a stack of storage batteries having the rated voltage, which leads to an increase of the cost of the solar charging system. Moreover, when an output voltage of the assembly of solar cells is larger than an overcharge voltage of the stack of storage batteries, the storage batteries will be damaged, or a lifetime of the storage batteries will be shortened.

Therefore, a ratio of the number of the solar cells to the number of the storage batteries should be carefully determined so that the output voltage of the stack of solar cells is slightly higher than a fullcharge voltage of the stack of storage batteries. In a charging system of the invention, a ratio of the number n of the solar cells in the assembly to the number m of the storage batteries in the stack (i.e. n/m) is within a range of 3.5 to 4.0.

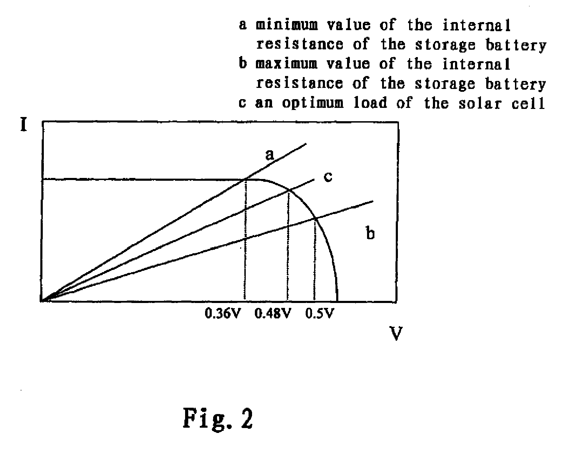

Moreover, in a case that the storage batteries are used directly as a load of the solar cells, an internal resistance of the storage battery should be carefully selected. Fig. 2 shows a typical I-V curve of the solar cell. As known by those skilled in the art, the solar cell could provide a maximum output power only under a condition that a resistance of the load is optimum. A larger or smaller resistance of the load will cause a decrease of the output power of the solar cell, and thus a decrease of the charging efficiency of the whole system. In the present solar charging system, the storage batteries are a load of the solar cells. Thus, the internal resistance of the stack of storage batteries should be set near an optimum value of the resistance of the load, which assures that the electric energy is supplied to the stack of storage batteries under the condition of maximum output power, and an optimum charging efficiency is achieved. Preferably, an upper limit of the internal resistance of each battery in the stack could be determined under the condition that an output power of each cell in the assembly reaches a maximum value under a standard light intensity, which corresponds to an output voltage of 0.48 V. However, it should be understood that the output power of each cell decreases not too much even in a case that the output voltage reaches 0.5 V. As for a determination of a lower limit of the internal resistance of each battery in the stack, not only should each solar cell in the assembly reach a sufficient output power, it should also supply an output voltage no less thana fullchargevoltage of each battery in the stack. Actually, the latter is a key factor in the determination of the lower limit. The lower limit of the internal resistance of each storage battery could be determined under the condition that each solar cell output a voltage of 0.36 V.

The storage batteries having different internal resistances are commercially available. For instance, the storage batteries having different internal resistances could be selected from the products of Taihang Power Source Incorporated Company, XinXiang, P. R. China (trademark Taihang).

In the present invention, since no resistive element such as a voltage converter is added to a charging circuit, there is no loss of electrical energy due to a use of a voltage converter. The electric energy generated by the solar cells, except for some trivial losses at the wiring and the diode, is mainly supplied to the storage batteries for charging. Moreover, an internal resistance of the storage batteries is selected so that an output power of the solar cells is optimized. Consequently, high charging efficiency is achieved.

### Example 1

The solar cells 1 are an assembly comprised of 36 solar cells connected in series, each of which has a peak voltage of 0.48 V and an area of 5cmx5cm. Thus, the peak voltage of the assembly is about 16.5-17.2 V. The storage batteries are a stack comprised of 9 storage batteries connected in series, each of which has a rated voltage of 1.2 V. Thus, the rated voltage of the stack is about 10.8 V, and the fullcharge voltage is about 15.48 V. An internal resistance of each battery is determined to be 2.65 Ω. Under a standard light intensity condition, an output voltage of the assembly of solar cells 1 is about 17.3V, and an output power is approximately a maximum value. Since the peak voltage of the assembly of solar cells 1 is a little higher than the fullcharge voltage of the stack of storage batteries, the storage batteries in the stack could be charged to their full capacity with a high charging efficiency.

The rated voltage of the stack of storage batteries is slightly lower than 12 V, which could be used for most applications requiring a 12 V DC voltage.

### Example 2

The solar cells 1 are an assembly comprised of 72 solar cells connected in series. The properties of each solar cell and each storage battery are the same as in example 1. Under a standard light intensity condition, an output voltage of the assembly of the solar cells 1 is about 34.6 V, and an output power is approximately a maximum value. Since the peak voltage of the assembly of solar cells 1 is a little higher than the fullcharge voltage (about 32.7 V) of the stack of storage batteries, the storage batteries in the stack could be charged to their full capacity with high charging efficiency.

The rated voltage of the stack of storage batteries is about 22.8 V, which could be used for most applications requiring a 24 V DC voltage.

### Example 3

The solar cells 1 are an array comprised of two assemblies of solar cells, which are connected in series and each of which is the same assembly as in example 1. The storage batteries are a stack of 19 storage batteries connected in series. The properties of each solar cell and each storage battery are the same as in example 1. Similar to example 2, the storage batteries in the stack could be charged to their full capacity with high charging efficiency.

Although the present invention has been described with reference to preferred embodiments, those skilled in the art will recognize that the invention could be applied in various forms, and various changes, variations, modifications may be made without departing from the spirit and scope of the invention. For instance, a furtehr assembly of solar cells could be further connected in parallel to the above solar cells, so as to increase an output current. Therefore, the described embodiments are to be considered in all respects only as illustrative and not restrictive.

## Claims

1. A solar charging system, comprising solar cells, storage batteries, and a diode connected in series between the solar cells and the storage batteries, an anode of the diode being connected to a positive electrode of the solar cells, and a cathode of the diode being connected a positive electrode of the storage batteries, so that the solar cells directly charge the storage batteries,
wherein a ratio n/m of the number n of the solar cells to the number m of the storage batteries is within a range of 3 . 5 to 4.0, and an internal resistance of the storage batteries is selected so that each solar cell outputs a voltage of 0.36 to 0.5 V under a standard light intensity condition.

2. The solar charging system according to claim 1, wherein the number of the solar cells is 36, and the number of the storage batteries is 9.

3. The solar charging system according to claim 1, wherein each of the storage batteries has a rated voltage of about 1.2 V.

4. The solar charging system according to claim 1, wherein each of the solar cells is made of poly silicon.

5. The solar charging system according to claim 1, wherein each of the solar cells is made of single-crystal silicon.

6. The solar charging system according to claim 1, wherein each of the solar cells is made of amorphous silicon.

7. The solar charging system according to any of claims 1 to 6, wherein each of the solar cells has a peak voltage of about 0.48 V.

8. The solar charging system according to any of claims 1 to 6, wherein the solar cells are two or more solar cell assemblies connected in series.
